**Europäisches Patentamt**

(19) **European Patent Office**

**Office européen des brevets**

(11) Publication number : **0 424 978 B1**

(12) **EUROPEAN PATENT SPECIFICATION**

(45) Date of publication of patent specification :
23.03.94 Bulletin 94/12

(51) Int. Cl.⁵ : **G11B 7/085**

(21) Application number : **90121579.8**

(22) Date of filing : **02.12.87**

(54) **Optical disk drive device and information storage device.**

(30) Priority : **02.12.86 JP 288423/86**
**15.06.87 JP 147033/87**
**30.04.87 JP 104744/87**
**29.06.87 JP 159834/87**
**05.08.87 JP 196842/87**

(43) Date of publication of application :
**02.05.91 Bulletin 91/18**

(45) Publication of the grant of the patent :
**23.03.94 Bulletin 94/12**

(84) Designated Contracting States :
**DE FR GB**

(56) References cited :
**GB-A- 2 029 051**
**JP-A-61 233 305**
**JP-A-61 269 262**

(56) References cited :
**PATENT ABSTRACTS OF JAPAN, vol. 6, no.
248 (P-160)(1126) 7December 1982; & JP-A-57
143 764**
**PATENT ABSTRACTS OF JAPAN, vol. 6, no.
195 (P-146)(1073) 5 October 1982; & JP-A-57
105 858**

(60) Publication number of the earlier application in
accordance with Art. 76 EPC : **0 270 357**

(73) Proprietor : **MITSUBISHI DENKI KABUSHIKI
KAISHA**
**2-3, Marunouchi 2-chome Chiyoda-ku
Tokyo (JP)**

(72) Inventor : **Ogawa, Masaharu, c/o Mitsubishi
Denki K.K.**
**Oyokikikenkyusho, 1-1, Tsukaguchihonmachi
8-chome**
**Amagasaki-shi, Hyogo-ken (JP)**

(74) Representative : **Barnard, Eric Edward et al**
**BROOKES & MARTIN High Holborn House
52/54 High Holborn**
**London WC1V 6SE (GB)**

## Description

### FIELD OF THE INVENTION

The present invention relates to optical disk devices or similar information storage devices which have a head movable with respect to the storage device and can write, read or erase the information.

### BACKGROUND OF THE INVENTION

Figure 1 shows a block diagram of an access control system described in Japanese Patent Application No. 101,439/1985 filed by the assignee of the present application on May 15, 1985 for an "Optical Disk Drive Device".

As illustrated, an optical disk 101 has a plurality of recording tracks on the disk. The tracks comprise series of pits disposed at a high density and arranged in a circular or spiral form. The disk 101 is fitted onto a spindle and is rotated by a disk-drive motor 102. The disk-drive motor 102 is rotated under the control of a disk-motor-drive control system 103.

An optical head 104 forms a light spot on the optical disk 101. The light spot is moved in the radial direction of the optical disk 101. The optical head 104 comprises a frame 105, a source of light such as a semiconductor laser 106, a collimating lens 107, a polarization beam splitter 108, a $\lambda/4$ plate 109, an optical-path changing mirror 110, an objective lens 111 which focuses the light beam from the light source 106 onto the medium surface of the optical disk 101 and forms a light spot 115 on the surface, a tracking actuator 112 which provides fine or microscopic movements of the objective lens 111 in the radial direction of the optical disk 101 for accurate positioning of the light spot on a recording track of the optical disk, and a split-photodetector 113 which has a pair of sensor parts adjacent to each other for detecting the return light reflected from the optical disk 101, and produces a pair of electrical signals corresponding to the amount of light received at the respective sensor parts.

An addition/subtraction amplifying circuit 114 determines the sum of the outputs from the split-photodetector 113 to produce a sum signal as an information signal (reproduced data signal), and determines the difference between the outputs of the split photodetector 113 to produce a difference signal as a tracking error signal. The tracking error signal is supplied to a track-traverse counter 118 and a speed-detecting circuit 120.

The track-traversing counter 118 receives the output signal from the addition/subtraction amplifying circuit 114 and detects the number of tracks traversed by the optical head 104. An output of this counter 118 is supplied to a target-velocity generation circuit 119.

The target-velocity generation circuit 119 receives the output signal of the track-traversing counter 118, and, at the time of access, generates a target-velocity signal for the light spot 115. The target-velocity signal is sent to a head-actuator drive control circuit 117.

The head-actuator drive control circuit 117 also receives an output signal from a polarity switching circuit 2. On the basis of these signals, the head actuator drive control circuit 117 controls the drive of a head actuator 116, such as a linear actuator.

When the head actuator 116 is driven through the head-actuator drive control circuit 117 to move the optical head 104 in the radial direction of the optical disk 101.

A speed detection circuit 120 detects the track-traverse speed (the speed with which light spot 115 traverses the tracks on the optical disk 115). The output of the speed detection circuit 120 is fed to the polarity switching circuit 2. The speed detection circuit 120, together with the polarity-switching circuit 2, forms a velocity-detection circuit 124.

The polarity-switching circuit 2 receives an output signal from an access-direction command generation circuit 123. Under the control of the output signal of the access-direction command generation circuit 123, the polarity-switching circuit 2 changes the polarity of the output of the speed detection circuit 120. More specifically, the detected speed (a scalar value) is converted into a detected velocity (a vector value) which also shows the direction.

As the above-described optical disk drive device obtains head position control information from the optical disk, the absolute position of the head cannot be reliably detected when operation of the servo-system is disturbed, e.g., in case of application of a large external impact force. In that case, as well as in the case of abnormal operation of the servo-system the head may run out of the proper range toward the center or periphery of the disk and collide with a stopper located at the end of the range of mobility. As a result of this collision, the head receives a blow and can be broken.

The same problem relates to magnetic disk devices, or any other equivalent information storage devices.

GB-A-2029051 discloses the use of an optical head position detector producing a signal whose magnitude varies with the position of the head within the utilizable range and a head position controller for controlling the position of the head in that utilizable region. When the tracking servo fails due to a shock or so, the position control is continued using the optical head position détector.

JP-A- 61 269262 discloses the use of a detector for detecting that the end of the utilizable region is reached.

## SUMMARY OF THE INVENTION

An object of the present invention is to provide such an information storage device, which protects the head from "run-out" under any extraordinary circumstances, protects the head from collision and breakage, and provides stable operation at the starting period.

According to the invention as defined in the appended claim 1, there is provided an information storage device having a head which can move with respect to an information-storing medium and write, read, or erase this information. The device is provided with a head position detector which detects the position of the head between the limits of the user utilizable region of said information storing medium and limits of mobility of said head, and operates so that when the head exceeds the above-mentioned limits of the user utilizable region, or receives a stop command, the head is moved to a position associated with the above-mentioned detector.

When for any reason the head runs out of its proper range, it will exceed the limits of the user utilizable region and reach the position of the head detector. The latter detects the head, moves it to a position associated with the detector, and thus protects the head from reaching the limits of its mobility, and hence, from collision with the stopper.

## BRIEF DESCRIPTION OF THE DRAWINGS

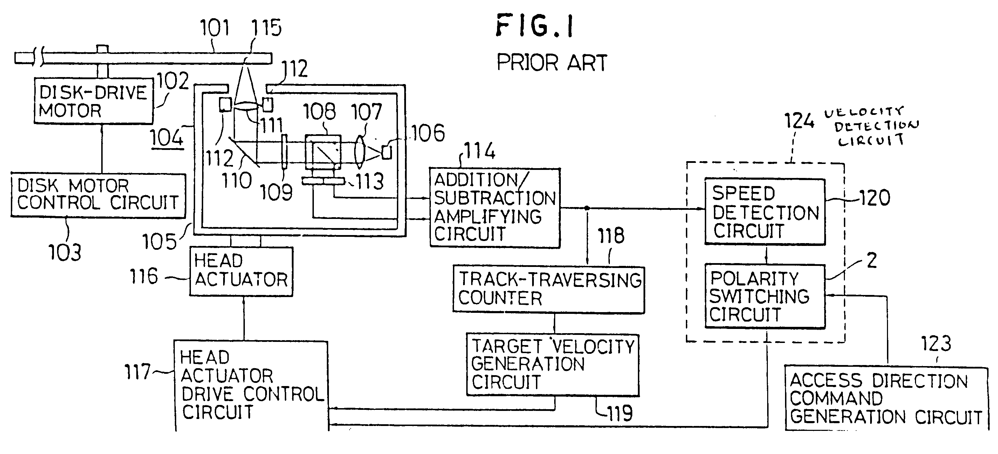

Figure 1 a block diagram of a known optical disk drive device.

Figure 2 is a block diagram of the device of another embodiment of the invention.

Figure 3 and Figure 4 show electric circuit diagrams of the elements of the device.

Figure 5 to Figure 7 are time charts which illustrate the operation of the device.

Figure 8 to Figure 10 are explanatory diagrams which show the area of linear output signals.

## DETAILED DESCRIPTION OF THE EMBODIMENTS

An embodiment of the invention will now be described with reference to the drawings.

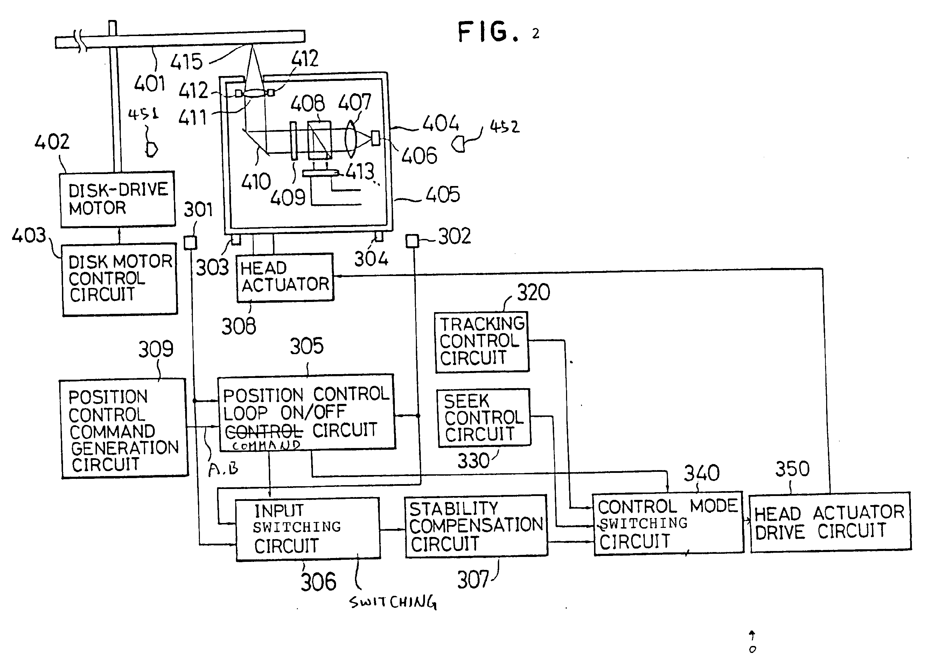

Figure 2 is a block diagram of an information storage device of an embodiment of the present invention.

A disk motor 402 is rotated under the control of a disk motor-control circuit 403. The disk motor 402 drives a spindle which carries an optical disk 401. Located beneath the optical disk 401 is an optical head 404 which can be moved in the radial direction of the optical disk 401 by means of a head actuator 308. The optical head 404 is provided with an optical system which is similar to a conventional one and comprises a source of light 406, an objective lens 411, and a split-photodetector 413. Similar to the conventional device, an output from the split-photodetector 413 is sent to an input of an addition/subtraction amplifying circuit, not shown.

The optical head 404 has a frame 405 having light-blocking plates 302 and 304 provided on the lower surface of the disk inner edge and the disk outer edge of the frame 405. Movement of the optical head 404 in the disk radial direction is limited by engagement of part of the optical head 404 with inner and outer stoppers 451 and 452.

Head position detectors 301 and 302 are provided to cooperate with the light-blocking plates 303 and 304 to detect the presence of the optical head 415 is at specific positions between the inner and outer limits (where the optical head 404 engages with the stoppers 451 or 452), and the limits of the user utilizable region of the disk (the region that can be utilized by the user).

In the illustrated embodiment, the head position detectors 301 and 302 are of the optical type, and the presence of the optical head 404 in a respective position is determined when the path of light is interrupted by the light-blocking plates 303 and 304.

A position control command generation circuit 309 generates commands A and B input to the position control loop on/off command circuit 305 for initiating radial position control over the optical head 404. The commands A and B are sent to a position control loop on/off command circuit 305. The command A is an inner position control command which initiates inner position control. The command B is an outer position control command which initiates outer position control.

Output signals of the head position detectors 301 and 302 are also sent to the input of the on/off command circuit 305. This on/off command circuit 305 produces on its output an on/off command of the position control loop. This output is sent to an input switching circuit 306. On the basis of its input, this circuit selects either an output signal from the head position detector 301, or an output signal from the head position detector 302, and then sends the signal to a stability compensation circuit 307, which is provided for stabilization of the position control system.

Reference numeral 320 designates a tracking control circuit, 330 is a seek control circuit for control over seeking operation of an optical spot 415 to a desired track. Output signals of these circuits, as well as the output of the stability compensation circuit 307, are sent to a control mode switching circuit 340. The control mode switching circuit 340 is responsive to an output signal of the on/off command circuit 305 for selecting one of the above-mentioned three input signals, and switches the control mode between (a) tracking control mode, (b) seek control mode, and (c) position control mode. The selected signal is sent to a head actuator drive circuit 350. The head actuator 308 is driven by a signal obtained from the drive circuit 350, and moves the optical head 404 in the radial direction of the optical disk 401.

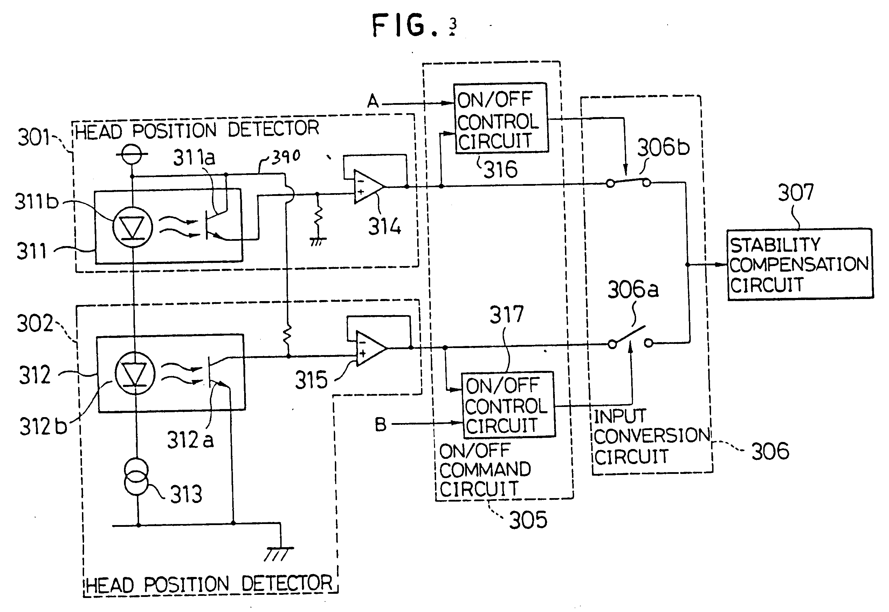

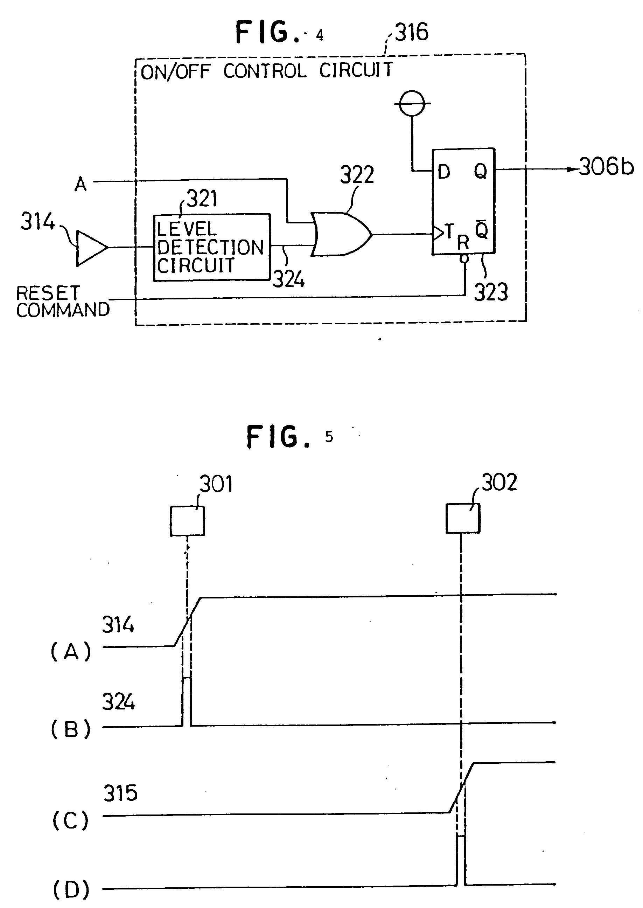

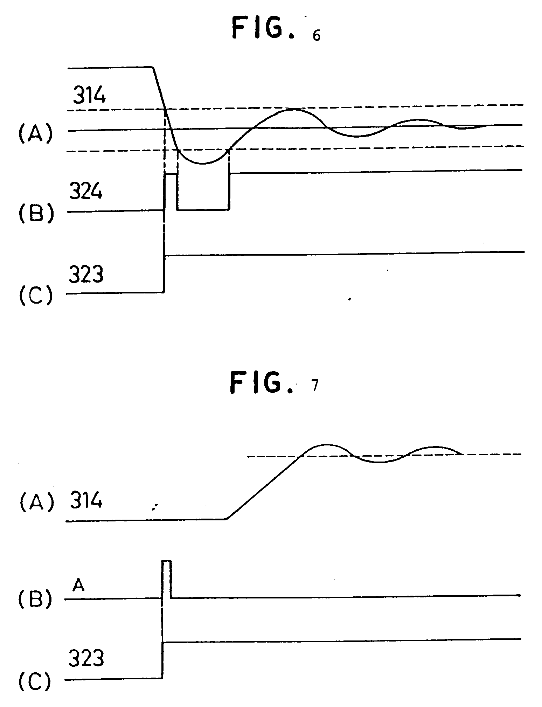

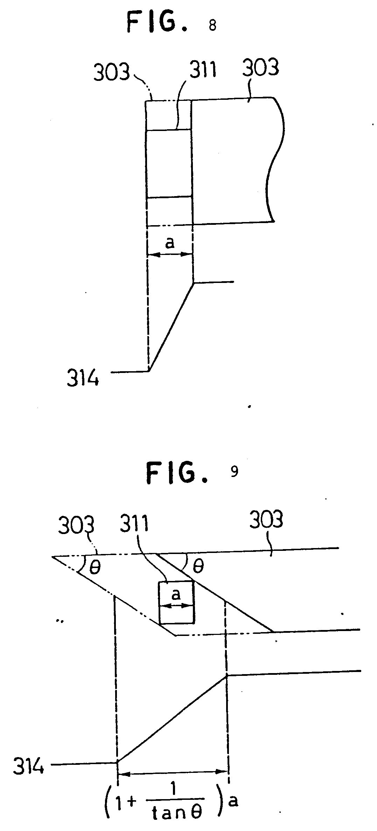

Figure 3 is a circuit diagram which shows details of the head position detectors 301 and 302, the position control loop on/off command circuit 305, and the input switching circuit 306.

The head position detector 301 comprises a photointerrupter (photocoupler) 311 located in the area over which the light-blocking plate 303 is moved. Similarly, the head position detector 302 comprises a photointerrupter (photocoupler) 312 located in the area over which the light-blocking plate 304 is moved. Light-emitting diodes 311b and 312b of both photointerrupters 311 and 312 are connected in series, so that they can be driven from a constant-voltage current source 313 of the head position detector 302.

The collector of a phototransistor 311a, which is included in the inner position detector 301, is connected to a power supply node 390, while its emitter is connected to a buffer amplifier 314. The output of the buffer amplifier 314 is sent to the input of an inner potential control loop on/off control circuit 316, which is included in the on/off command circuit 305, as well as to a contact 305b in the input switching circuit 306.

The emitter of a phototransistor 312a, which is included in the outer head position detector 302, is connected to the ground potential node, while its collector is connected to the input of a buffer amplifier 315, and via a resistor to the power-supply node 390. The output of amplifier 315 is connected to the input of an outer position control loop on/off control circuit 317, which is incorporated in the on/off command circuit 305, as well as to a contact 306a of input switching circuit 306. The operation of the contacts 306a and 306b are opposite to each other. That is - when the contact 306a is ON, the contact 306b is OFF; and when the contact 306a is OFF, the contact 306b is ON.

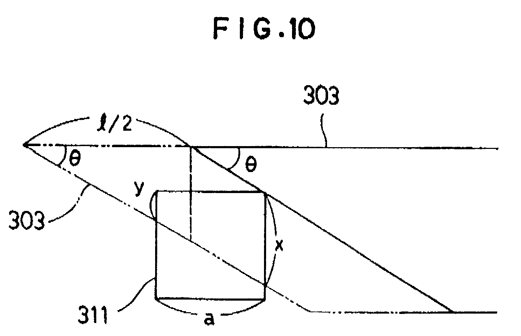

Figure 4 is a schematic diagram of the inner position control loop on/off control circuit 316.

A level detection circuit 321, which receives on its input an output signal of buffer amplifier 314, may comprise, e. g., a so-called window comparator, which decides whether the level of the input signal is in a specified range. If it is in the specified range, it outputs an inner position detection pulse 324, which is sent to an OR gate 322. Another input on the OR gate 322 is the inner position control command A. An output signal of the OR gate 322 is applied to a trigger terminal T of a D-flip-flop 323. A terminal D of D-flip-flop 323 is fixed on a "High" level, while a reset terminal R receives a reset command from position control command generation circuit 309. Thus, a "Set" output Q of D-flip-flop 323 forms an inner position control loop on/off control command and serves as a control signal for switching for the contact 306b.

The outer position control loop on/off control circuit 317 has the same construction as the inner position control loop on/off control circuit 316 described above.

Operation of the device of the above embodiment will now be described.

Assume that, while the light spot is moved or positioned by means of the seek control circuit 330 or the tracking control circuit 320 for driving the head actuator 308 or the tracking actuator 412, the light spot moves out of the user utilizable region. If, for example, the light spot moves out toward the inner periphery, and the light path of photointerrupter 311 of the inner head position detector 301 is interrupted by the blocking plate 303, then a position control loop-on command is issued from the position control loop on/off command circuit 305, and the output of the the the inner position control circuit 1 is selected in the input switching circuit 306. This output is then transmitted to the control mode switching circuit 340 via a stabilization compensation circuit 307 formed for example of a phase-lead compensation circuit, etc.

In the control-mode switching circuit 340, when the position control loop in the position control loop on/off command circuit 305 is turned ON, the seek control, or tracking control, whichever has been conducted, will be turned OFF, and the output signal of the stability compensation circuit 307 will be transmitted to the head actuator drive circuit 350, and the head actuator 308 will be driven in such a manner that the light spot is moved to and held at a position where the output voltage of inner head position detector 301 coincides with the position of a predetermined reference voltage.

A similar operation is performed when the light spot moved out toward the outer periphery is similar.

The above-outlined operation will next be described in further detail.

Because output of the photointerrupter 311 shown in Figure 3 is derived from the emitter, and the output of the photointerrupter 312 shown in Figure 3 is derived from the the collector, the relationship between the amount of passing light and the output of the photointerrupter 311, and the relationship between the amount of passing light and the output of the photointerrupter 312 are reverse to each other. When the light spot 415 of the optical head is within the user utilizable region, the output signal of the buffer amplifier 314 will be raised to the "High" level, while the output signal of the buffer amplifier 315 will remain on the "Low" level, as shown in Figure 5.

In Figure 5, an abscissa shows the position of the optical head 404, and hence, the light-blocking plate 303 or 304. When the light-blocking plate 303 is shifted toward the inner periphery (toward the left in Figure 5), then as shown in Figure 5 (A), the output signal of the buffer amplifier 314 is gradually decreasing, and will be at the "Low" level when the light is completely blocked.

When the light-blocking plate 304 moves toward the outer periphery, and interrupts the light path in the photointerrupter 312, the output signal of the buffer amplifier 315 is gradually increasing, and when the light is blocked completely, the output signal of the buffer amplifier 315 is at the "High" level.

These signals are received at the input of the level detector 321 in the inner position control loop on/off control circuit 316. In the level detector 321 is set an appropriate threshold value between the "High" and "Low" levels of the buffer amplifier 314. The detector therefore produces an inner position detection pulse 324 (Figure 5(B)). In a similar manner, an outer position detection pulse (Figure 5(D)) is formed in the outer position control loop on/off control circuit 317.

Figure 6 shows the time variation pattern of the output signal of the buffer amplifier 314 at (A), the inner position detection pulse 324 at (B), and the "Set" output signal Q of D-flip-flop 323 at (C). When the optical head 404 moves toward the inner periphery of the disk, and light-blocking plate 303 blocks the photointerrupter 311, the output signal of the buffer amplifier 314 (Figure 6(A)) decreases, which raises the inner position detection pulse 324 (Figure 5(B)). As a result, D-flip-flop 323 is "Set", and the output Q is raised to the "High" level (Figure 6(C)).

This "Set" output signal Q is sent to the contact 306b of the input switching circuit 306, and the output signal of buffer amplifier 314 is transmitted to the input of stability compensation circuit 307. When the optical head 404 moves further inside due to inertia, the output of buffer amplifier 314 goes down to the lower limit of the level detector 321, and the inner position detection pulse 324 falls to the lower level, but the D-flip-flop 323 will still be maintained at the "Set" state.

When the output signal of the buffer amplifier 314 is sent to stability compensation circuit 307, the head actuator 308 is automatically driven so that the level of this signal coincides with a target voltage representing the target position along the radial direction that is set in the control circuit system (Figure 5(A)).

The optical head 304 whose light-blocking plate 303 has passed the inner head position detector 301 and is at the inside of the inner head position detector 301, the optical head is then returned to the position of the inner head position detector 301, and is held there.

In this way, even if the light-blocking plate 303 passes the head position detector 301 while the optical head 404 is moving toward the inner periphery of the disk, the optical head 404 returns to the head position detector 301. It is thus protected from collision with the stopper 451.

Apart from preventing the collision of the head with the stopper 451 under the "run-away" condition, the device of the present invention also stabilizes pull-in action into the operation of the focusing servo-system (tracking servo system) directly after power-on. This feature will now be described in more detail.

Figure 7(A) shows an output signal of the buffer amplifier 314, Figure 7(B) shows an inner position control command A, and Figure 7(C) shows the "Set" output signal Q of the D-flip-flop 323. When the optical head 404 is at the innermost position in the optical head, at the time of power-on, the light-blocking plate 303 completely blocks the light path in the photointerrupter 311 of the inner detector 301. As a result, the output signal of the buffer amplifier 314 is at the "Low" level.

At the time of power-on, for the purpose of reading information from the control track, the position control command generating circuit 309 produces the inner position control command A (which is shown to be in the form of a pulse), which is supplied to the inner position control loop on/off circuit 316. This, in turn, triggers and sets the D-flip-flop 323, and the output signal Q is set to the "High" level. In the same manner as has been described earlier, the head actuator 308 will be driven such that the output signal of the buffer amplifier 314 will coincide with the target voltage shown by broken line in Figure 7(A), and the optical head 404 will assume a position corresponding to that of the inner head position detector 301.

If the head position detector 301 is so positioned that the light spot 415 is then on the control track on the inner periphery side of the disk 404, even if the apparatus is installed inclined or some external forces are exerted at the time of power-on, it is ensured that the light spot be on the control track, and the information in this track can be read without fail. This enables subsequent controls to be performed correctly.

Where the optical head 404 is installed at the outer position, a similar control can be performed. For this purpose, the position control command generating circuit 309 may be arranged to produce an outer position control command B at the time of the power-on.

Figure 8 shows a positional relationship between the light-blocking plate 303, the photointerrupter 311 and the output signal buffer amplifier 314. Where the inner edge of the light-blocking plate 303 is perpendicular to the direction of movement, within the boundary of the photointerrupter's width a the output signal will be changed linearly.

As compared to this and as shown in Figure 9, with the inner edge of light-blocking plate 303 inclined at a certain angle $\theta$ to the direction of movement, the output signal of the buffer amplifier 314 will vary linearly within the range of $(1+1/\tan\theta)a$.

Finally, an expansion of the linear zone decreases the amount of overshooting in the position control circuit, and thus will shorten the setting time.

A solid line in Figure 10 shows the condition under which photointerrupter 311 is not blocked by light-blocking plate 303, while the phantom line in this drawing shows the condition under which photointerrupter is blocked half way. The area of photointerrupter 311 which receives the incident light in the unblocked position is a square with the side equal to a, while in the latter case, the light is shaded on the area which in the vertical direction is defined by length y on the inner side, and by length x on the outer side. The following relationships can be written on the bases of this designation:

$$x + y = a \quad (41)$$
$$x = y + a\tan\theta \quad (42)$$
$$x = \ell/2\tan\theta \quad (43)$$

Where $\ell$ is the length of movement of light-blocking plate 303 between the solid line position and the position in which the light is completely blocked.

The following expression can be obtained from equations (41) to (43):

$$\frac{\ell}{a} = 1 + \frac{1}{\tan\theta} \quad (44)$$

Formula (44) is an expression which shows an expansion factor of the linear area for head position detector 301. In the case of $\theta$ equal to 45°, the expansion factor is equal to 2, as compared to the case with $\theta = 90°$.

Such an expansion is identical both for the direction toward the outer side of light-blocking plate 304 and toward the outer side of head position detector 302.

The above-mentioned embodiment was considered for the case where the position of the optical head is detected by using a light-passing photointerrupter and a light-blocking plate. However, the same results can be obtained with the use of a reflection-type photoreflector and a reflecting plate.

In the case of a reflection-type element, the signal will have polarity opposite to that obtained in the case of a light-passing element. The invention is not limited to application of only a photointerrupter, or a photoreflector, and can be realized with the use of light-emitting and light-receiving elements. In addition, in the case of the reflection system, the reflecting plate can be substituted by an appropriate mark (inside of which the reflection is smaller than outside of the mark) applied onto optical head 404. Enlargement of the zone with linear characteristics of the output signal is equally applicable for the case of a reflecting plate, as well as a mark.

Light-blocking plates on the inner and outer sides can be combined with setting positions of head position detectors 1 and 302. Moreover, head position detectors 301 and 302 can be installed on the optical head, while the light-blocking plates 303 and 304 will be fixed.

Instead of an optical principle, the head position detectors may operates on a magnetic principle, or may have any other suitable construction.

In the illustrated embodiment, stability compensation circuit 307 is based on a phase-lead compensation circuit, but the stability can be compensated also through the velocity feedback line.

D-flip-flop 323 of the position control loop on/off command circuit can be substituted by an R-S flip-flop, or by another latch circuit.

The principle of the invention can also be realized on the basis of a combined use of tracking actuator 412 and head actuator 308. Only a part of the optical head can be made movable.

The head actuator may be a linear-type or a rotary-type actuator.

The invention is not limited only to optical disk devices. The same principle is applicable to information storage media on magnetic disks, or similar devices which can be traversed by the magnetic head.

It has been shown that when the head is moved away from the working position, it will be moved back to the position determined by the position detector, so that it will be protected from the collision with the stopper, and hence from breakage.

## Claims

1. An information storage device having a head (404) which can move with respect to an information-storage medium (415) between limits of mobility (451,452) and can write and read, or erase information on said medium, said information being confined to an operation range on said medium, the device comprising:
   a tracking control circuit (320);
   a seek control circuit (330);
   a position control circuit (340,350);
   a head position detector (301,302) which is disposed on the inner periphery side or the outer periphery side of said disk, and detects the position of said head when the head is outside of the user utilizable region;
   said head position detector producing a signal (Fig.5A) whose magnitude varies with the position of the head over at least part of the range outside of said user utilizable region;
   a head position controller (305) responsive to the signal from said head position detector and performing head position control in which said head is displaced to and maintained at a predetermined position as determined by the output from said position detector; and
   means (340) for interrupting a tracking or seeking operation when said head traverses said head position detector during the tracking or seeking and causes said head position detector to begin said head position control.

2. A device according to claim 1, wherein said position detector comprises a photocoupler cooperating with a blocking plate moving with said optical head to interrupt the light in the photocoupler when the optical head is outside the user utilizable region.

3. A device according to claim 2, wherein the magnitude of the output of the photocoupler varies linearly with movement of said optical head linearly over said at least part of the range outside the user utilizable region.

**Patentansprüche**

1. Informationsspeichervorrichtung mit einem Kopf (404), der sich in bezug auf ein Informationsspeichermedium (415) zwischen Beweglichkeitsgrenzen (451,452) bewegen und lesen und schreiben oder Informationen auf dem Medium löschen kann, wobei die Informationen auf einen Operationsbereich auf dem Medium begrenzt sind, welche Vorrichtung aufweist:
   eine Spurfolgesteuerschaltung (320);
   eine Suchsteuerschaltung (330);
   eine Positionssteuerschaltung (340,350);
   einen Kopfpositionsdetektor (301,302), der auf der inneren Peripherieseite oder der äußeren Peripherieseite der Scheibe angeordnet ist und die Position des Kopfes erfaßt, wenn sich der Kopf außerhalb des benutzerverwendbaren Bereichs befindet;
   wobei der Kopfpositionsdetektor ein Signal (Fig. 5A) erzeugt, dessen Größe sich mit der Position des Kopfes über wenigstens einem Teil des Bereichs außerhalb des benuterverwendbaren Bereichs verändert;
   eine Kopfpositionsvorrichtung (305), die auf das Signal vom Kopfpositionsdetektor anspricht und eine Kopfpositionssteuerung durchführt, bei der der Kopf zu einer vorbestimmten Position versetzt und in dieser gehalten wird, die durch das Ausgangssignal des Positionsdetektors bestimmt wird; und
   Mittel (340) zum Unterbrechen einer Spurfolge- oder Suchoperation, wenn der Kopf den Kopfpositionsdetektor während des Spurfolgens oder Suchens überquert und bewirkt, daß der Kopfpositionsdetektor die Kopfpositionssteuerung beginnt.

2. Vorrichtung nach Anspruch 1, worin der Positionsdetektor einen Fotokoppler aufweist, der mit einer Unterbrechungsplatte zusammenwirkt, die sich mit dem optischen Kopf bewegt, um das Licht im Fotokoppler zu unterbrechen, wenn sich der optische Kopf außerhalb des benutzerverwendbaren Bereichs befindet.

3. Vorrichtung nach Anspruch 2, worin die Größe des Ausgangssignals des Fotokopplers sich linear mit der Bewegung des optischen Kopfes linear über wenigstens einen Teil des Bereichs außerhalb des benutzerverwendbaren Bereichs verändert.

**Revendications**

1. Dispositif de stockage d'informations ayant une tête (404) qui peut se déplacer par rapport à un support de stockage d'informations (415) entre des limites de mobilité (451, 452) et peut écrire, lire ou effacer des informations sur ledit support, lesdites informations étant limitées à une gamme de fonctionnement sur ledit support, le dispositif comprenant :
   un circuit de commande de suivi de piste (320) ;
   un circuit de commande de recherche (330) ;
   un circuit de commande de position (340, 350) ;
   un détecteur de position de tête (301, 302) qui est disposé sur le côté périphérique intérieur ou le côté périphérique extérieur dudit disque, et détecte la position de ladite tête quand la tête est en dehors de la région utilisable par l'utilisateur ;
   ledit détecteur de position de tête produisant un signal (fig. 5A) dont la valeur varie avec la position de la tête sur au moins une partie de la gamme en dehors de ladite région utilisable par l'utilisateur ;
   un dispositif de commande de position de tête (305) pouvant répondre au signal dudit détecteur de position de tête et effectuant une commande de position de tête dans laquelle ladite tête est déplacée vers une position prédéterminée et maintenue dans cette position telle qu'elle est déterminée par la sortie dudit détecteur de position ; et
   des moyens (340) pour interrompre une opération de suivi ou de recherche de piste quand ladite tête traverse ledit détecteur de position pendant le suivi ou la recherche de piste et amène ledit détecteur de position de tête à commencer ladite commande de position de tête.

2. Dispositif selon la revendication 1, dans lequel ledit détecteur de position de tête comprend un photocoupleur coopérant avec une plaque de masquage se déplaçant avec ladite tête optique pour interrompre la lumière dans le photocoupleur quand la tête optique est en dehors de la région utilisable par l'utilisateur.

3. Dispositif selon la revendication 2, dans lequel la valeur de la sortie du photocoupleur varie linéairement avec le déplacement de ladite tête optique sur au moins ladite partie de la gamme en dehors de la région utilisable par l'utilisateur.

FIG.1

PRIOR ART

FIG.1
PRIOR ART

EP 0 424 978 B1

FIG. 2

EP 0 424 978 B1

# FIG. 3

HEAD POSITION DETECTOR

301

311a  390

311b

311  311

314

HEAD POSITION DETECTOR

302

312

312b

312a

313  315

A → ON/OFF CONTROL CIRCUIT

316

306b

317

306a

B → ON/OFF CONTROL CIRCUIT

ON/OFF COMMAND CIRCUIT

305

INPUT CONVERSION CIRCUIT

306

STABILITY COMPENSATION CIRCUIT

307

EP 0 424 978 B1

# FIG. 4

316

ON/OFF CONTROL CIRCUIT

A

314

321

LEVEL
DETECTION
CIRCUIT

324

322

D    Q    →306b

T    Q̄
R

323

RESET
COMMAND

# FIG. 5

301

302

314
(A)

324
(B)

315
(C)

(D)

# FIG. 6

314

(A)

324

(B)

323

(C)

# FIG. 7

(A) 314

(B) A

(C) 323

# FIG. 8

# FIG. 9

# F I G . 10